# EUROPEAN PATENT APPLICATION

(11) **EP 1 117 269 A1**
(43) Date of publication of application: **18.07.2001**
(21) Application number: 00100613.9
(22) Date of filing: 13.01.2000
(51) Int. Cl.: H04Q 7/38

(54) **Method and devices for improved handover procedures in mobile communication systems**

(71) Applicant: TELEFONAKTIEBOLAGET LM ERICSSON (publ), 126 25 Stockholm (SE)
(72) Inventor: Petersson, Justus, 90403 Nürnberg (DE); Palenius, Torgny, 24650 Löddeköpinge (SE)
(74) Representative: Mohsler, Gabriele

(57) **Abstract**

A method for the handover of a terminal in a cellular communication system with base stations for providing connections to terminals in at least one cell (C) served by the base station is described. A terminal (UE) has a memory for identifying a measurement set of cells and measures quantities of the cells (C) identified in the measurement set. The decision (46, 72) of a handover of a terminal (UE) to a further connection is executed according to the measurement quantities. A classification (22, 62) is performed whether the execution of a handover is urgent. The number of cells (C) identified in the measurement set is reduced to a defined number if the handover is classified as urgent and the number of cells (C) identified is larger than the defined number. Devices and programs performing the method are also described.

## Description

### Technical field of the invention

The present invention relates to a method according to the preamble of claim 1. Devices and programs for use in a handover procedure are also described.

### Background

In a mobile communication system, base stations provide wireless connections to terminals like mobile phones, laptops or personal digital assistants (PDA). A base station serves one or several limited areas denoted as cells. In a frequently used configuration, several sector shaped cells are served by a single base station. The areas of different cells can overlap, especially near the cell boundaries or if hierarchical cell structures are used. Cells can also cover the same area, e.g. to allow connections in different frequency bands to the same base station.

Due to the limited coverage of the cells, the handover of a terminal from an existing connection to a further connection is often necessary to maintain a connection with the communication system if a terminal is moving. A handover can also be preferable to improve the performance of the system, for example if specific parameters are requested for a connection or if a cell is congested. The execution of a handover procedure is described e.g. in Technical Specification TS 25.331 (V3.0.0) of the 3^{rd} Generation Partnership Project (3GPP). The handover can be performed to a further connection with a different base station or in a different cell of the same base station (channel rate switching). Existing connections can either be maintained in a soft or softer handover, the latter denoting a handover between different cells of a single base station, or connections can be canceled during the handover procedure. Those cells in which a terminal has a connection are denoted as the active set of cells for the terminal.

To prepare the decision for the handover to a further connection, the terminal has a measurement unit which measures quantities indicating the quality of cells in which present connections exist and the quality of neighboring cells. The reception level or the reception quality on a channel of the monitored cells are often measured for this purpose, e.g. the bit error rate which can be calculated from check sums sent with the signals. Generally, the results of the measurements are transmitted to a node in the system which decides whether a handover is performed and which initiates it according to the results in a so-called mobile assisted handover (MAHO).

For every cell, at least one radio channel or frequency is specified over which signals are sent which allow to evaluate the quality. Different channels correspond to different frequency bands and/or timeslots and/or can be separated by a code assigned to the channel. The corresponding transmission techniques are known as frequency (FDMA), time (TDMA) and code division multiple access (CDMA), respectively. In many cases, a combination of access schemes is used, e.g. channels in GSM (Global System for Mobile communication) systems are generally selected timeslots in a specified frequency band. Measurements can be performed regularly or on demand from the system. Quantities of a single channel or a group of channels can be measured for a cell. For example, the Primary Common Pilot Channel (P CPICH) according to UMTS (Universal Mobile Telecommunication System) specifications can be monitored in the measurements or the channels on the beacon frequency according to GSM specifications which comprise the frequency correction channel (FCCH) and the Synchronization Channel (SCH).

To simplify the measurements, the terminal is provided from the system with a list of suitable cells which shall be monitored in the measurements. The terminal has a memory for identifying a selection of cells on which measurements are performed and in which the cells from the list are stored. The selected cells are denoted as the measurement set of the terminal.

While measurements in a TDMA system like GSM can be performed in idle timeslots, data transmission in CDMA systems, e.g. on a speech connection, is generally continuous in the time domain. To provide time for performing measurements in other frequency bands or systems, terminals in a CDMA system can enter a compressed mode in which the data rate is decreased by puncturing or by decreasing the spreading factor of the signals in the channel coding as described in applications WO 97/40592 and WO 97/40593. By keeping the transmission rate constant, idle times for the measurements are provided in this way. For discontinuous traffic, idle times can alternatively be provided by higher layer scheduling wherein the transmission of data packets is delayed for the measurement period.

When channels distinguished by different channel codes are sent on the same frequency band, measurements of their quantities can in principle be performed simultaneously with the receiver of the terminal tuned the corresponding band. The number of channels which can be monitored in this way is, however, limited by the capabilities of the hardware in the terminal. If an intersystem handover or a handover to a different frequency band is required, measurements generally have to be performed time-multiplexed, i.e. consecutively, unless the terminal is provided with more than one receiver. During these intervals, other channels, e.g. on a different frequency, cannot be monitored.

Often, an intersystem handover or a handover to a different frequency band has to be performed in a comparatively short period of time because this type of handover is necessary at the boundaries of coverage and the connection will be lost if no new suitable cell for the handover is identified in time. Generally, a terminal performs measurements on other frequencies or on other systems for predetermined intervals which are specified by commands from a control node in the communication system. If the measurement set of cells monitored by a terminal is big, the potential error of the measured quantities is increased due to short measurement intervals for the single cells. Correspondingly, the risk is high that cells suitable for a handover are not identified properly. The evaluation of the measurement results and the decision to perform a handover gets increasingly complex and time consuming with the number of cells considered. Terminals with more than one receiver to provide more time for measurements are expensive.

### Summary of the invention

It is an object of the present invention to obviate these disadvantages and improve handover decisions in a mobile communication system. It is a further object to provide reliable measured quantities for the decision of a handover in a limited time. It is still another object to provide embodiments of the invention which can be implemented in a simple manner.

According to the invention, the method described in the characterizing part of claim 1 is performed. Furthermore, the invention is embodied in devices and programs as described in the claims 11, 16 and 26. Preferable embodiments are described in the dependent claims.

When measurements are initiated as a basis for the decision to which cell a handover is to be performed, the urgency of the handover decision is classified in the proposed method. A handover decision is preferably classified as urgent if it may be necessary to execute a handover faster than between cells of the same specification. If this time limit is exceeded, the probability that a connection will be lost during the handover procedure increases. Because generally several target cells for the handover are possible at the time of the classification, a handover decision is preferably classified as urgent if any urgent handover procedure is possible for the terminal from the cell or cells in which it is presently connected. For example, if the terminal has connections in a cell at the border of an area which is covered by a UMTS Terrestrial Radio Access Network (UTRAN) and a handover procedure to an adjacent GSM cell is possible, all measurements performed by terminals in this cell can be classified as urgent.

Although a defined time limit can be used to classify a handover as urgent, this approach is unsuitable in many cases as it requires a high computing effort. Alternatively, the classification can for example be performed according to parameters in a command from the system to the terminal to perform measurements for the handover preparation. Measurements of the terminal, parameters stored in control nodes of the system for different types of handover procedures or for different base transceiver stations or any combinations of such parameters and measurements can also be used for the classification.

In case of a handover classified as urgent, measurements are performed only on a defined number of cells. It is possible to define different numbers of cells for different cases of urgent handover decisions. For example, a higher number of cells can be kept in the measurement set if channels evaluated for different cells are broadcast in the same frequency band and measurements on them can be performed simultaneously. If the number of cells in the measurement set of the terminal is larger than the defined number, the number evaluated is reduced to the defined number of cells. Else the number of cells in the measurement set can remain constant. It is possible to delete the cells which are not evaluated in the measurements from the memory of the terminal or to set an indicator that specific cells belong to or are excluded from the measurement set for an urgent handover.

Different steps of the method can be executed in different devices. Because the method limits the number of cells in the measurement set for an urgent handover, the measurement time for a cell in the set can be increased if the total measurement time remains constant. With a specified measurement time in a frequency band, the quality of parallel measurements in this band can be improved by reducing the number of simultaneously evaluated cells. Correspondingly, the measurements can be performed with higher reliability and influences of short term fluctuations are reduced.

The proposed method allows faster and more reliable measurements, in particular for handover decisions which have to be performed in a short interval of time. An example for this case is a handover within a communication system in which cells are considered for which measurements have to be executed in different frequency bands. The method is especially suited for an inter-frequency that the same system as an inter system handover between two communication systems according to different specifications, e.g. different specifications from the group GSM, PDC (Pacific Digital Cellular), TAGS (Total Access Communication System), D-AMPS (Digital Advanced Mobile Phone System) and UTRAN. Due to the smaller measurement set, the communication system can reduce the measurement time specified in measurement commands to terminals and thus accelerate handover decisions. With smaller or without reductions in the measurement time, the reliability of the measurement results is significantly improved. The method is preferable for terminals with a single receiver which can perform measurements only on one frequency band at a time. Due to the improvements in the measurement reliability it is, however, also suitable for terminals with two or more receivers. The smaller number of measurements and transmitted results allows for a lower energy consumption of the terminal, in particular if the energy consuming switching of reception bands in a receiver of the terminal is reduced.

In a preferred embodiment of the method, the classification includes a check whether cells evaluated in the measurements correspond to at least two different specifications or frequency bands. For most cases, this is a simple and suitable precondition for the classification of a handover as urgent because it indicates that the terminal is located near a boundary of the coverage area of a communication system and the connection can be lost if a handover is not performed sufficiently fast. The information whether the evaluated cells correspond to different specifications or frequency bands can be derived for example in a simple way from a command sent to the terminal for specifying the cells for the measurements.

Generally, a controlling node in the system, e.g. an RNC (Radio Network Controller) or a BSC (Base Station Controller), sends commands to the terminal to perform measurements for the preparation of a handover. Preferably, the classification of a handover is performed according to parameters in the command. For example in GSM and UMTS systems, different numbers of time slots per frame and different numbers of frames per time interval which are dedicated to measurements can be specified by a measurement type identifier. In a preferred embodiment of the method, an identifier or a group of identifiers is specified for which a handover decision is classified as urgent. It is possible that those identifiers for which the time share dedicated to measurements is above a defined threshold correspond to urgent measurements. Alternatively, one or more identifiers can be reserved to indicate an urgent handover and, optionally, different kinds of urgent handovers. Preferably, the device performing the classification can access a table specifying identifiers relating to an urgent handover.

In an exemplary embodiment of the method, a control node in the communication system selects cells in the measurement set. The selection is then transmitted to the terminal and stored in its memory. In this way, the operator can specify cells which are considered important for the handover decision, e.g. because the quality of a cell is frequently underestimated due to special geographical conditions or users often move in a preferred direction like along a highway or a railway line. The selection can be limited to one or few cells in the measurement set. It is also possible that the system specifies the number of cells in the measurement set.

In an advantageous method, cells in the measurement set are selected by a processing unit in the terminal. For example, a measurement set can be selected which comprises the defined number of cells with the best quality received by the terminal. Another suitable selection are the cells in the active set of the terminal in addition to cells of a different specification or frequency band having the best quality. It is possible that the terminal selects cells in addition to cells selected by the system or according to a defined number of cells specified by the system.

In many present communication systems, e.g. those according to GSM or UMTS specifications, measurement commands from control nodes to the terminal specify both a frequency band for measurements and the time for measurements in this band. For a frequency band in which the terminal presently has connections, a measurement time is not specified. It is proposed that especially terminals for such systems select only those cells in the measurement set for which measurements are performed in a frequency band in which the terminal presently has connections, i.e. a terminal can remove only cells from the measurement set in a current frequency band of its receiver. Measurements on other frequency bands are performed as specified in the measurement command. In this way, ambiguities between commands from control nodes and decisions of the terminal are avoided, especially if both terminals are present which reduce the measurement set for an urgent handover and terminals which do not classify whether a handover is urgent.

Often, measurements of the terminal provide an insufficient estimation of cells being preferable for a handover. It is, therefore, proposed that a terminal is provided with parameters for an adjustment of measured quantities. For example, a control node in the system can determine cells or have a list of cells which are preferable or unfavorable for measurements and transmit corresponding parameters for the adjustment to the terminal. In this way, an operator can influence connections of a terminal, e.g. to improve the load sharing between different cells or frequency bands. Empirical results from measurements of the operator or special transmission conditions due to umbrella cells or topological facts such as street corners can be considered. The adjustment parameters can also depend on the position of a terminal within a cell if the position is determined by the communication system. A suitable adjustment parameter is a positive or negative offset which is added by a processing unit in the terminal to a measured quantity for a cell. It should be noted that customary terminals evaluate measurement results on a logarithmic scale, i.e. the addition of an offset generally corresponds to the adjustment of the measured quality by a factor. Alternative to an offset, an identifier for important or unimportant cells can be used as adjustment parameter.

A terminal in a CDMA system often performs measurements in compressed mode wherein transmissions are suspended for an interval of time by reducing the spreading factor on a connection. The compressed mode has the disadvantages that the transmission quality of user data is reduced and the transmission energy is often increased to compensate for quality losses. In a terminal with a layered protocol stack, the transmission of user data on a speech or data connection can be suspended for the measurement time by delaying data packets on a higher layer of the protocol stack. The latter method is denoted as higher layer scheduling. Due to the necessary buffering of data, higher layer scheduling is also disadvantageous. The duration of any operational mode with suspended data transmission is preferably minimized. Entering a mode with suspended data transmission is necessary for a CDMA terminal with a single receiver to perform inter frequency and inter system measurements. It is for these reasons proposed that the classification of the urgency of a handover is performed upon entering a mode with suspended data transmission. Parameters in a control command to enter the respective mode can be used to classify the urgency.

The time necessary to perform a handover decision depends on the load of the processor evaluating measured results. If the processor is highly loaded with other tasks, the percentage of processing time attributed to the evaluations is low and the evaluation time increased for this reason. A handover duration which is sufficiently short for a low processor load can increase beyond an acceptable limit if the load is high. In an advantageous method, the load in at least one processing unit evaluating measured quantities is therefore determined and the defined number of cells in the measurement set is chosen according to the load.

Especially, the load of a central processing unit of the terminal has to be considered. If more than one processor is used in the evaluation, e.g. if a processor in the terminal processes the measurements and a processing unit in a system node evaluates the results in the decision of a handover, the loads of more than one processor can be considered.

A control device according to the invention for a mobile communication system has at least one interface for connection to mobile terminals. It is possible that the control device has more than one interface, e.g. according to different connection specifications. Connections over the interface can be performed using other devices in the communication system. If the control device is for example a switching node like an MSC, messages between the interface and a terminal can be relayed over an access network of the system. Preferably, the control device is a controller of a base station, for example a base station controller in a GSM network or a radio network controller in a UTRAN network. A base station is also a suitable control device.

A processing unit of the control device can initiate the handover of a terminal from a first connection to a further connection. The execution of the handover can be performed by the same or further control devices in the system. It is possible to maintain the first connection after the handover procedure. Commands to control measurements by the mobile terminal are sent from the processing unit over one of the interfaces and results of said measurements are received over an interface, generally over the same interface. The processing unit initiates the handover according to the measurement results.

The processing unit has means to perform a classification of the urgency of a handover. Preferably, the classification is performed after the control device performs a decision that the terminal suspends transmissions to provide intervals for measurements. If the control device performs both the classification and the decision to suspend transmissions, the classification can be transmitted to the terminal with the command to enter a mode with suspended transmission, e.g. the compressed mode.

According to said classification, the processing unit selects the number of measurements. In a simple embodiment, the number of measurements is limited to a defined number in case of an urgent handover and not influenced by the control device else. To transmit the selected number to the terminal, the processing unit has means for setting a parameter specifying the selection in a measurement command. All means described are preferably embodied as software programs executable in the processing unit. Measurements initiated by the proposed device can be performed faster and more reliable, especially if the handover decision has to be performed in a limited time. The device can be used in the above embodiments of the proposed method.

A preferable control device has means for selecting at least one of the cells for the measurements and specifying the selected cells in a measurement command. The selection can be performed for example according to the measurement results or to specifications by an operator which can be stored in a list in the control device.

In an advantageous embodiment, the classification comprises a check whether the measurements are performed on cells corresponding to at least two different specifications or frequency bands. Preferably, a handover is classified only as urgent if one of these preconditions is fulfilled.

It is furthermore proposed that the control device transmits parameters for an adjustment of measured quantities to the terminal, especially offset values for measured quantities. The parameters can be transmitted in a measurement command.

A terminal for a mobile communication system has a reception unit, e.g. a transceiver, for receiving and separating radio channels. The channels are for example transmitted on different frequency bands in an FDMA system or separated by different codes in a CDMA system. A measurement unit in the terminal can measure quantities of a received channel which indicate the quality of the respective cell. Measurements are performed on channels identified in a measurement set in a memory of the terminal. A controller, e.g. a central processing unit of the terminal, initiates measurements on the channels identified in the measurement set. The measured results can be evaluated in a handover procedure. Preferably, they are transmitted for this purpose to a control node in the system. According to the invention, the controller is provided with a classification, whether the handover procedure is urgent. In case of an urgent handover, the controller performs a selection of the channels in the measurement set according to the classification. For example, the channels can be deleted from the measurement set in case of an urgent handover while the measurement set remains unchanged else. The means for selecting the channels can for example be embodied as software program executed in the processor. The terminal can be used in the described method.

Advantageously, the classification is performed in the terminal, for example in the controller. It can be performed according to parameters in a command from the system to execute measurements. The terminal can then analyze the command to obtain the classification. Alternatively a control device in the system can classify the urgency of a handover and transmit the classification to the terminal in a measurement command.

A preferable classification includes a check whether measured channels correspond to cells of at least two different specifications or frequency bands.

Preferably, a terminal includes a unit for determining the load in a unit evaluating the measurement results, e.g. a measurement routine for the load in the central processing unit. The defined number of channels in the measurement set can then be chosen according to the determined load. In this way, varying measurement times and varying measurement precision due to different processor loads can be avoided.

It is proposed that the selection of channels by the terminal is limited to channels which are in a frequency band in which the terminal presently has connections. In this way, ambiguities are avoided if a control device in the system specifies measurements on other frequency bands.

In a preferable terminal, the memory includes a parameter for the adjustment of a measured quantity of a channel. It is proposed that the adjustment parameter is an offset value for the measured quality of the assigned channel.

Especially in a terminal for a CDMA system, measurements are often performed in a mode in which data transmissions of the terminal are suspended, e.g. in a compressed mode or a higher layer scheduling mode. Advantageously, the classification is performed when the terminal enters the mode in which data transmissions of the terminal are suspended.

A program unit according to the invention can be stored on a data carrier, for example a magnetic or optical recording medium, or it can be loadable into a device for a mobile communication system. Said device, e.g. a control node or a terminal, controls measurements on selected cells, wherein the measured results are evaluated in the same or a different device of the system in a handover of a terminal to a further connection. The program unit performs a classification whether the execution of a handover procedure is urgent. If the handover is classified as urgent and the number of selected cells is larger than a predefined number, the unit initiates a reduction of the number of selected cells to the predefined number. Generally, the program unit is a part of the software for controlling the device. The unit can perform any steps of the methods described.

The foregoing and other objects, features and advantages of the present invention will become more apparent in the following detailed description of preferred embodiments as illustrated in the accompanying drawings.

Brief description of the drawings
- Fig. 1: shows the cell coverage of a communication systems in the state of the art
- Fig. 2: shows a sequence of time multiplexed measurements in a terminal
- Fig. 3: shows a flow chart of a method according to the invention wherein the classification of the urgency is performed in a terminal
- Fig. 4: shows an evaluation of measurement results for cells
- Fig. 5: shows a signaling sequence in a method according to the invention
- Fig. 6: shows a flow chart of a method according to the invention wherein the classification of the urgency is performed in a control node

### Detailed description of the invention

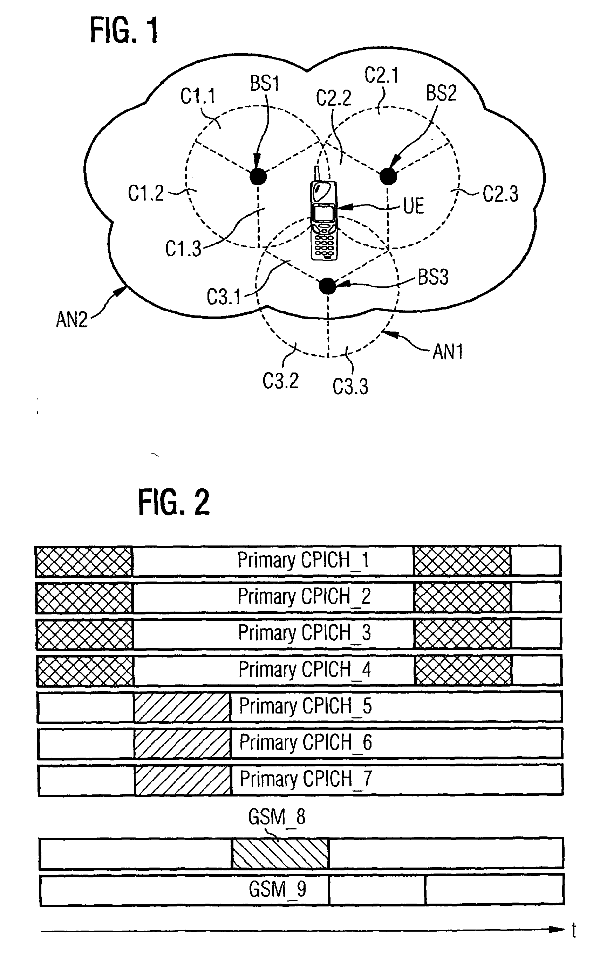

In figure 1, the coverage area of a communication system with different access networks AN1, AN2 is depicted. A first access network AN1 comprises several base stations BS1, BS2, BS3 which provide connections to user equipment, e.g. one or more terminals UE. In the example, the access network AN1 corresponds to a wideband CDMA specification. The base stations are controlled by a control node, e.g. an RNC, which in turn provides connections to a core network (not indicated). Every base station BS provides connections in three cells C, wherein neighboring cells generally have an overlap region. In a wideband CDMA system, user equipment can have connections in more than one cell, e.g. if connections are not released in a soft or softer handover of a terminal UE. In a soft handover, user equipment is connected to different base stations while in a softer handover the user equipment has connections to different cells of a single base station. A terminal can be in soft and softer handover simultaneously. In the position shown, the terminal has preferably connections in the cells C 1.3, C2.2 and C3.1, i.e. these cells constitute the active set of the terminal UE.

The cells of the access network AN1 overlap with the coverage area of a further access network AN2 of a different specification and using a different frequency band, e.g. an access network AN2 with base station subsystems according to GSM specifications. The base station subsystems can be connected to the same core network as the base stations BS1, BS2, BS3 or a to different one. The area of the further access network AN2 can also be subdivided into cells which are served by one or more base transceiver stations.

If the terminal UE moves into a region where the first access network AN1 provides no coverage, it has to perform measurements on the further access network AN2 to avoid loosing all connections. Measurements on the further access network AN2 can also be ordered by the communication system in case of a congestion in the first access network AN1. The measurement results are evaluated in a decision whether an inter system handover between the access networks AN1, AN2 or a handover between different cells within one of the access networks is to be performed. The cells which are evaluated in the measurements are denoted as the measurement set of the terminal UE. The measurement set can include cells according to different specifications and consists generally of the active set of the terminal and cells in the neighborhood of those in the active set, e.g. all the cells indicated in fig. 1.

An inter system handover must often be performed comparatively fast to avoid loosing all connections because there is the risk that the terminal UE leaves the coverage area of access network AN1 before a connection in access network AN2 is established. A fast handover can also be necessary within an access network, for example if the cells C of the access network AN1 support connections on different frequency bands and an inter frequency handover is necessary to avoid loosing the connection. If a handover has to be performed fast and the measurement set of the terminal UE is big, measurement reports can be erroneous. Limited hardware resources in the terminal UE and short measurement times do not allow to perform many precise measurements in parallel. Good cells in which a connection should be maintained or added in a handover can therefore be missed.

Unless a terminal is equipped with different receivers, measurements can only be performed in one frequency band at a time. This is shown in figure 2 wherein the time axis is indicated at the bottom and different hatchings correspond to different frequency bands. In a first frequency band, the Primary Common Pilot Channels (P CPICH) 1 - 4 of four cells in a CDMA system are transmitted. Generally, one or more cells corresponding to the channels 1 - 4 constitute the active set of the terminal while the measurement set consists of all channels indicated. The quality of the channels 1 - 4 can be measured simultaneously in a first interval of time with the receiver of the terminal tuned to the corresponding frequency band. With an increasing number of parallel measurements, the precision of the results decreases and a terminal can evaluate only a limited number of cells simultaneously. If the terminal in the example can measure the quality of four cells at the same time, additional cells in the same frequency band have to be measured in a later measurement interval. To improve the precision, it can also be advantageous, to measure the quality of the P CPI channels 1 - 4 in more than one measurement interval.

In a second frequency band, the P CPI channels 5 - 7 of three further CDMA cells are transmitted which must be evaluated in a later interval of time as the receiver has to switch to the corresponding frequency band before. Cells transmitting in still further frequency bands require a dedicated interval for the measurement in every corresponding band. Therefore, the quality of beacon frequencies 8, 9 corresponding to two different GSM cells has to be measured in respective intervals after the measurement on the CDMA cells is finished. If the terminal has a single receiver, measurements on the channels 5 - 9 can only be performed in intervals of time in which the transmission of user data, e.g. on a speech or data connection, is suspended. Measurements on a big set of cells transmitting on several different frequency bands can correspondingly require a long time in which connections of the terminal to the system may be lost before a handover can be executed. The frequency bands for the measurements and the intervals of time for every band are generally determined by a control node the communication system which transmits for example a number of frames and timeslots per frame to be used for the measurements in a band to the terminal. Measurements do not need to be performed continuously, i.e. every frame.

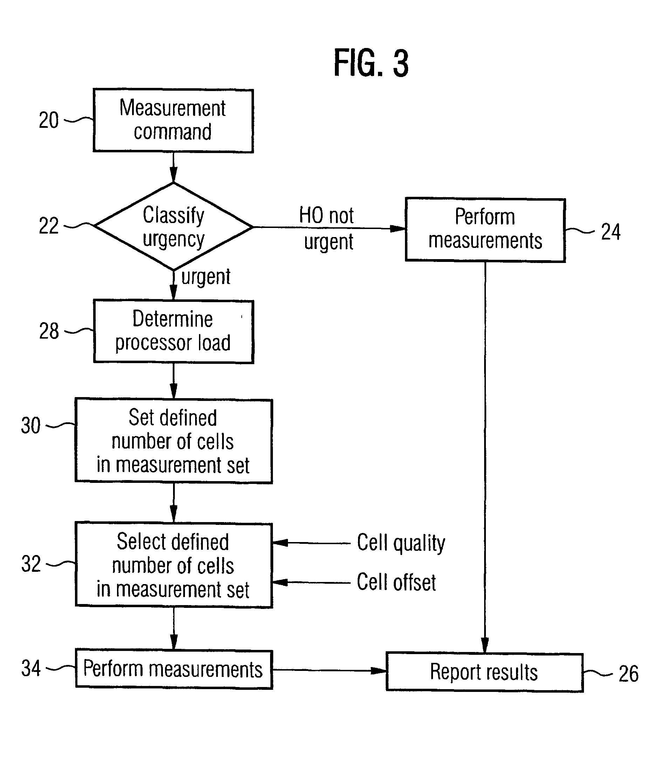

A flow chart of an improved method in a handover process is depicted in figure 3. The steps of the flow chart are performed in a terminal according to the invention, preferably as software executed in a processor or processor system of the terminal. In a first step 20, the terminal receives a measurement command from the access network to which it is presently connected. In the command, the access network orders the terminal to perform measurements on at least one frequency band different from the band in which the terminal presently has connections. These measurements can be inter frequency or inter system measurements. Unless the terminal is equipped with two or more receivers, a terminal in a CDMA system generally switches into a compressed mode or another mode with suspended data transmission to perform the measurements.

The terminal performs a classification 22 whether the measurement command corresponds to an urgent handover decision. For this purpose, parameter settings in the command are evaluated, e.g. parameter settings for a compressed mode. For the classification 22, the terminal can comprise a table which indicates those parameter settings which correspond to an urgent handover. It is possible that different kinds of urgent decisions are specified in the table which is for example stored in the SIM (Subscriber Identity Module) of the terminal. If the handover is not classified as urgent, measurements are performed on the whole measurement set of the terminal including those cells specified in the measurement command received in step 20. The results are finally reported to the access network in reporting step 26.

If a handover is classified as urgent, the present processor load of the terminal is determined in step 28. The number of channels in the measurements are preferably adapted to the present load of the processor which indicates on how many channels measurements can be performed in parallel with sufficient precision. A processor load indicator can be implemented as a process which interrogates the present load of the central processor in the terminal and optionally calculates the average time necessary to get a response. The load can also be indicated as a percentage of the processor capacity presently allocated to other processes, i.e. a value from the interval [0,1]. Preferably, the processor load is determined and updated regularly so that step 28 can be limited to a query of the present value.

In setting step 30, the defined number of cells in the measurement set for the urgent handover is determined. It is possible that different defined numbers correspond to different classifications of urgency in step 22. Furthermore, the processor load is considered in setting the defined number which is preferably reduced in case of a high processor load. For example, the terminal can keep only the active set of cells in the measurement set for an urgent handover with a high processor load and one or more additional cells in case of a lower processor load. Further parameters for setting the defined number are also possible, e.g. the defined number can be increased if cells in the same frequency band can be measured simultaneously. It is conceivable that instead of an explicitly defined number an indicator implicitly defines the number, e.g. an indicator can specify that the defined number is equal to the number of cells in the active set of the terminal. Instead of the total number of cells in the measurement set, the number of cells in the present frequency band of the terminal could be indicated, especially if only cells in this band are selected by the terminal.

In selection 32, the defined number of cells is selected for the measurement set. A selection is preferably only performed for cells in the frequency band in which the terminal has present connections to avoid differences to a list of cells for other frequency bands which can be specified in command 20. A simple selection is that only the active set of cells is kept in the measurement set in addition to cells on other frequency bands specified by the access network in command 20. For the selection 32, preferably the quality of cells is considered which is stored from previous measurements. In addition, offset values for the cells can be considered. The offset values can be transmitted from the access network in measurement command 20 or another message. Preferably, the cells for which the quality adjusted by the offset value is highest are selected for the measurement set.

For the selected measurement set, a measurement 34 of the cell quality is performed. Due to the reduced measurement set, the precision of the measurements is generally improved. Finally, the results are transmitted in step 26 to the access network for further evaluation in a handover procedure.

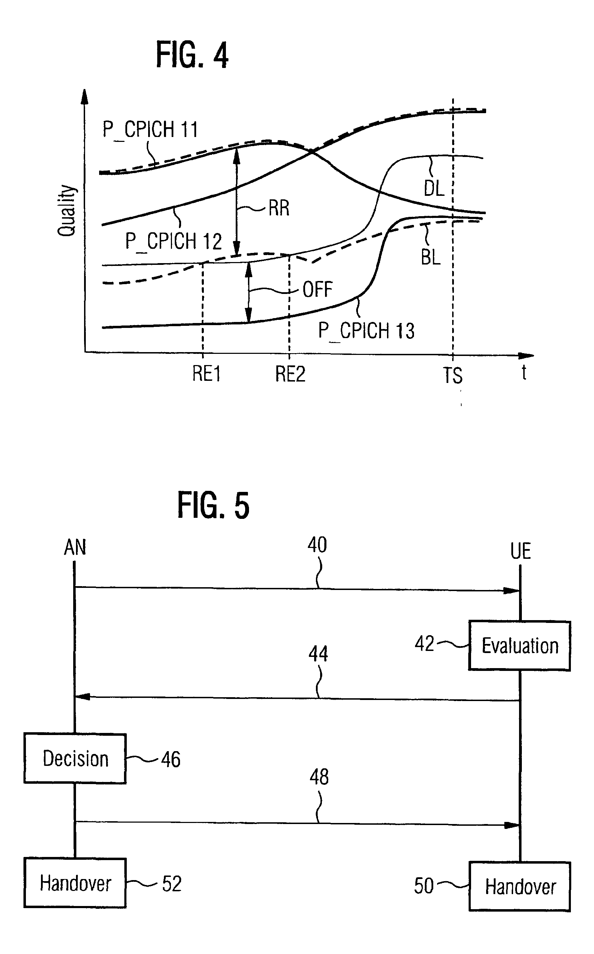

The evaluation of measurement results by a terminal is described with respect to figure 4. Measured qualities of the Primary Common Pilot Channels (P CPICH) 11 - 13 of different cells are indicated for a period of time. Suitable quantities for the evaluation of the quality of a cell are, for example, the path loss, the signal to interference ratio or the bit error rate (BER) or, especially in CDMA systems, the chip energy per total received channel power density E_{C}/I₀ or the received signal code power (RSCP). Combinations of different quantities are possible. The importance of cells can be signaled from the network by an offset value. In the example, the measured quantity for P CPICH 13 is adjusted by a positive offset OFF which is added to the measured value, i.e. the cell appears better than it actually is as indicated by the line DL. It is also possible to use a negative offset to reduce the probability of a handover to the corresponding cell. Reasons for using an offset can be for example load sharing between cells or a differing importance of cells due to coverage reasons.

A terminal can be notified by a message from the access network to which it is presently connected upon which reporting events RE the measurements shall be reported to the access network. Different possible reporting events RE are described in 3GPP Technical Specification 25.331. Examples for common reporting events are that the quality of a channel enters or leaves the reporting range RR of the terminal which is a negative offset to the strongest channel in the present measurement as indicated by the broken line BL in figure 4. The reporting range can be specified and changed by commands from the access network. In the example, measurement reports from the terminal to the access network are triggered by the reporting events RE1, RE2 because the measured quality of P CPICH 13 adjusted by the offset OFF leaves and enters the reporting range, i.e. the lines DL and BL intersect. A further reporting event can be the intersection of the adjusted P CPICH 13 as indicated by line DL and P CPICH 11 if this condition is defined as a measurement reporting event by a control message from the access network.

On the basis of these measurements, the terminal can decide, e.g. in the above selection 32, on which cells in the current frequency band measurements are performed in case of an urgent handover. If channels for the measurement set are selected at a time TS and the defined number of cells in the present frequency band is one, preferably P CPI channel 12 is selected which has the highest quality. If the defined number of cells in the set is two, P CPICH 13 is preferably selected in addition because the quality adjusted by the offset OFF is higher than the quality of P CPICH 11. In many practical cases, the number of cells in the measurement set will be significantly higher so that the selection provides a considerable reduction of the number of cells in the measurement set.

Fig. 5 shows an exemplary signaling sequence for a terminal UE which is connected to the access network AN of a CDMA system. From the access network AN, e.g. initiated by an RNC in access network AN, a command 40 is sent to the terminal UE with a request to the UE to perform measurements including cells in a GSM system. In command 40, different parameter settings are possible which specify for example the time which is dedicated to measurements in different frequency bands. It is possible to reserve parameter settings which specify that a handover is urgent. Alternatively, the terminal UE considers all commands 40 with parameter settings specifying measurement times above a defined time limit as urgent.

The following evaluation and measuring sequence 42 is for example performed as described with respect to figure 3. The terminal UE first determines from the parameters in command 40 whether a handover is urgent. When the handover is not urgent, measurements are performed in sequence 42 on all cells in the present measurement set. The parameter setting can, however, indicate that a handover is urgent. For example, command 40 can be sent because the access network AN is highly loaded to achieve a fast load reduction by a handover and avoid a congested situation. If a handover is urgent and the present measurement set is larger than the number of cells which are to be evaluated in an urgent handover, the measurement set is reduced and measurements are only performed on the reduced set. In the example, cells can be removed especially in the present frequency band in which no handover is possible due to the highly loaded situation. This allows precise and quick measurements on the GSM system.

Results of the measurements are reported to the access network AN in a message 44 which includes both results on the quality of GSM and CDMA cells. Then, a decision 46 is performed in the access network AN, e.g. in an RNC, on the basis of the measurement results whether a handover can be performed, in the example to avoid a congested situation. If the result of decision 46 is to perform a handover, a message 48 is sent to the terminal to request the handover, i.e. an inter system handover in the example. The handover sequences 50, 52 in the terminal UE and in the access network AN can be executed as it is known in the state of the art.

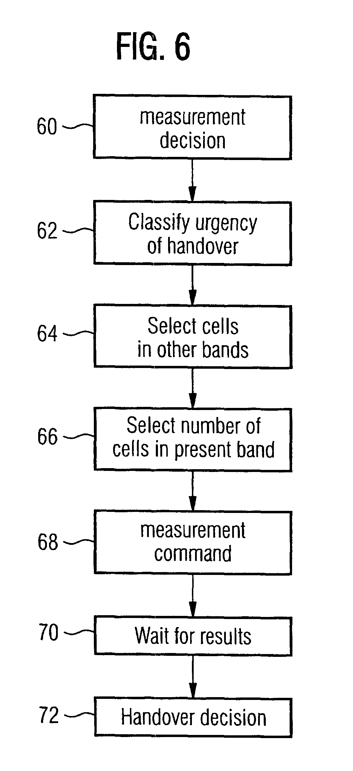

Figure 6 shows an embodiment of the method wherein the classification whether a handover is urgent is performed in a node in the access network, e.g. in an RNC. In a first step 60, a decision is performed that a terminal shall make measurements to evaluate the quality of cells for a handover. After the decision, a classification 62 is performed whether the execution of a handover is urgent. A handover can for example be classified as urgent if former measurements by the terminal indicate only few cells with sufficient quality for a handover, if the terminal is located in a cell at the edge of the coverage area of the access network or if measurements indicate that a congested situation in the access network is possible.

In selection 64, suitable cells for measurements are selected by the access network in frequency bands in which the terminal presently has no connections. According to the classification 62, a further selection 66 is performed which number of cells shall be evaluated in the present frequency band of the terminal. Instead of the number, the identity of the cells for measurements in the present frequency band can be specified in selection 66. The sequence of selections 64, 66 could also be reversed or both performed simultaneously. The results of the selections 64, 66 and the measurement time in every frequency band are specified in a measurement command 68 to the terminal. The terminal selects the measurement set according to the command 68, performs the measurements and reports the results to the access network, which waits for the results in step 70 and performs the handover decision 72 according to them. It is possible that a terminal can modify the selected number of cells, e.g. according to the present processor load.

The above embodiments admirably achieve the objects of the invention. However, it will be appreciated that departures can be made by those skilled in the art without departing from the scope of the invention which is limited only by the claims.

## Claims

1. Method for the handover of a terminal in a cellular communication system with base stations for providing connections to terminals in at least one cell (C) served by the base station, wherein a terminal (UE) has a memory for identifying a measurement set of cells and measures quantities of the cells (C) identified in the measurement set, and wherein the decision (46, 72) of a handover of a terminal (UE) to a further connection is executed according to the measured quantities, characterized in that
a classification (22, 62) is performed whether the execution of a handover is urgent
and the number of cells (C) identified in the measurement set is reduced to a defined number if the handover is classified as urgent and the number of cells (C) identified is larger than the defined number.

2. Method according to claim 1, wherein the classification (22, 62) includes a check whether the cells (C) evaluated correspond to at least two different specifications or frequency bands.

3. Method according to claim 1 or 2, wherein the system sends a command to the terminal (UE) to perform measurements and the classification (22) is performed according to parameters in the command.

4. Method according to any preceding claim, wherein a control node in the communication system selects cells (C) in the measurement set and the selection is transmitted from the control node to the terminal (UE).

5. Method according to any of the preceding claims, wherein the terminal (UE) selects cells (C) in the measurement set.

6. Method according to claim 5, wherein the terminal (UE) selects those cells (C) in the measurement set for which measurements are performed in a frequency band in which the terminal (UE) has present connections.

7. Method according to any preceding claim, wherein a terminal (UE) is provided with parameters for an adjustment of measured quantities.

8. Method according to any preceding claim, wherein a terminal (UE) suspends transmission of user data for the measurement time.

9. Method according to claim 8, wherein the classification (22) is performed when the terminal (UE) enters a mode of operation with suspended data transmission.

10. Method according to any of the preceding claims, wherein the load in a processing unit evaluating measured quantities is determined and the defined number of cells (C) in the measurement set is chosen according to the determined load.

11. Control device for a mobile communication system, said device including at least one interface for connection to mobile terminals and a processing unit to initiate the handover of a terminal (UE) from a first connection to a further connection, wherein commands to control measurements by a mobile terminal (UE) are sent from the processing unit over one of said interfaces and results of said measurements are received over one of said interfaces, wherein the processing unit initiates a handover according to the results, characterized in that
the processing unit has means for performing a classification (62) of the urgency of a handover,
the processing unit has means for selecting the number of measurements according to said classification (62),
and the processing unit has means for setting a parameter specifying the selection in a measurement command.

12. Control device according to claim 11, wherein the control device specifies cells (C) for the measurements in a measurement command.

13. Control device according to claim 11 or 12, wherein the control device is a controller of a base station.

14. Control device according to any of the claims 11 to 13, wherein the classification (62) comprises a check whether measurements are performed on cells (C) corresponding to at least two different specifications or frequency bands.

15. Control device according to any of the claims 11 to 14, wherein the control device specifies parameters for an adjustment of measured quantities to the terminal in a measurement command.

16. Terminal for a mobile communication system, said terminal (UE) including a reception unit for receiving and separating radio channels, a measurement unit for measuring quantities of a received channel, a memory for identifying a measurement set of channels and a controller for initiating measurements on the channels in the measurement set, wherein the measured results are evaluated in a handover procedure, characterized in that
the controller is provided with a classification (22, 62) whether the handover procedure is urgent,
and the controller has means to perform a selection of the channels in the measurement set according to the classification (22, 62).

17. Terminal according to claim 16, wherein the classification (22, 62) includes a check whether measured channels correspond to cells (C) of at least two different specifications or frequency bands.

18. Terminal according to claim 16 or 17, wherein the controller performs the classification (22).

19. Terminal according to claim 18, wherein the classification (22) is performed according to parameters in a command from the system to execute measurements.

20. Terminal according to claim 18 or 19, wherein the terminal (UE) includes a unit for determining the load in a unit evaluating the measurement results and the defined number of channels in the measurement set is chosen according to the determined load.

21. Terminal according to any of the claims 16 to 20, wherein the selection is performed for channels in a frequency band in which the terminal (UE) has present connections.

22. Terminal according to any of the claims 16 to 21, wherein the memory includes a parameter for the adjustment of a measured quantity of a channel.

23. Terminal according to claim 22, wherein the adjustment parameter is an offset value for the assigned channel.

24. Terminal according to any of the claims 16 to 23, wherein the terminal (UE) has a mode of operation in which data transmissions are suspended and wherein measurements are performed in this mode.

25. Terminal according to claim 24, wherein the classification (22) is performed when the terminal (UE) enters a mode in which data transmissions are suspended.

26. Program unit on a data carrier or loadable into a device for a mobile communication system, wherein said device controls measurements on selected cells (C) and the measured results are evaluated in a handover of a terminal (UE) to a further connection, characterized in that
the program unit performs a classification (22, 62) whether the execution of a handover procedure is urgent
and the program unit initiates a reduction of the number of selected cells (C) if the handover is classified as urgent and the number of selected cells (C) is larger than a predefined number.

27. Program unit according to claim 26, wherein the program unit performs at least one step of a method according to any of the claims 1 to 10.
